# FASCICULE DE BREVET EUROPEEN

(11) **EP 0 406 793 B1**
(45) Date de publication et mention de la délivrance du brevet: **01.03.1995**
(21) Numéro de dépôt: 90112671.4
(22) Date de dépôt: 03.07.1990
(51) Int. Cl.: G02B 6/44

(54) **Cables à fibres optiques résistant à une saute de température à 350 degrés pendant une courte durée**
Faseroptisches Kabel widerstandsfähig gegenüber einem Kurzzeittemperaturanstieg auf 350 Grad Celcius
Optical fibre cable resistant to a short-term rise in temperature of 350 degrees celcius

(30) Priorité: 05.07.1989 FR 8909041
(43) Date de publication de la demande: 09.01.1991
(73) Titulaire: ALCATEL CABLE, 92111 Clichy Cédex (FR)
(72) Inventeur: Bonicel, Jean-Pierre, F-69005 Lyon (FR); Tatat, Olivier, F-69740 Genas (FR)
(74) Mandataire: Weinmiller, Jürgen

(56) Documents cités:
- EP-A- 0 212 169
- EP-A- 0 284 340
- WO-A-84/00819
- DE-A- 3 739 879
- DE-C- 1 963 571
- GB-A- 2 138 168
- JP-A- 1 114 813
- PATENT ABSTRACTS, vol. 6, no. 221 (P-153)[1099], 5 novembre 1982 ; & JP-A-57 124 315

## Description

La présente invention concerne un câble à fibres optiques capable de résister à une saute de température à 350°C pendant une courte durée, de l'ordre de quelques dizaines de secondes, comprenant a) au moins un élément porteur en matériau composite fibres de verre-résine thermodurcissable b) un support des fibres optiques formé par un jonc rainuré entourant l'élément porteur ou par un tube muni dans son épaisseur d'éléments porteurs, le jonc ou le tube étant en polymère thermoplastique c) des fibres optiques disposées dans les rainures du jonc ou l'intérieur du tube, d) une matière visqueuse de remplissage des rainures ou du tube des fibres optiques, e) une enveloppe constituée par un ruban de polymère thermoplastique. De tels câbles sont nécessaires notamment comme câbles de garde de câbles électriques à haute ou moyenne tension soumis à des courants de défaut élevés à la suite de coups de foudre ou de court-circuits. Il a été constaté que ces courants de défaut pouvaient porter les câbles à fibres optiques disposés à proximité pendant quelques secondes ou quelques dizaines de secondes à 300° ou 350°C.

On a déjà proposé à cet effet des câbles à fibres optiques à structure serrée, comportant une matière à base de résines silicones. Mais ces câbles ne peuvent supporter de grands allongements.

Le document GB-A 2138 168 montre un câble optique résistant au feu, comportant une âme optique entourée d'une enveloppe rubanée en mica, ladite âme optique comportant des fibres optiques, au moins un support tubulaire en plastique recevant les fibres, une matière visqueuse de remplissage constituée de résine de silicone, et au moins un élément porteur en matériau composite fibre de verre-plastique autour duquel sont assemblés les supports.

Le document D E-A- 37 39 879 montre un autre câble optique résistant à la chaleur dans lequel les fibres optiques et des éléments porteurs sont assemblés dans un support tubulaire, pouvant être en polyoléfine réticulée, pour former ainsi l'âme optique du câble. Cette âme est recouverte d'une enveloppe en matériau thermoplastique contenant une charge ignifugeante.

L'abrégé JP-A-57-12 4315 montre un câble optique qui, pour éviter l'effet de la chaleur, utilise un support tubulaire en polyéthylène réticulé contenant des fibres optiques assemblées sur un porteur et ainsi maintenues par rubanage.

On a également proposé des câbles comportant une âme à jonc rainuré en aluminium ou alliage léger, avec des fibres optiques gainées à l'aide d'une résine fluorée. La fabrication d'un jonc en aluminium ou alliage léger nécessite cependant un outillage particulier plus coûteux que l'outillage habituel.

La présente invention a pour but de procurer un câble à fibres optiques capable de résister à des sautes de températures de 300° à 350°C, qui se prête en outre à de grands allongements, mais qui ne nécessite qu'un procédé et un appareillage de fabrication analogues à ceux des câbles à fibres optiques courants.

Elle a pour objet un câble à fibres optiques capable de résister à une saute de température, pouvant supporter une température de l'ordre de 350°C pendant une courte durée, ledit câble comportant une âme optique entourée par une enveloppe rubanée périphérique, dans lequel ladite âme optique comporte au moins un support plastique recevant lesdites fibres optiques, une matière visqueuse de remplissage en résine silicone, et au moins un élément porteur en matériau composite fibres de verre-résine thermodurcissable, caractérisé en ce que ledit support plastique est en polyéthylène réticulé et le ruban formant ladite enveloppe est en résine polyimide.

De préférence, lorsque le support des fibres optiques est un tube, le polyéthylène est réticulé par addition d'un silane et traitement par l'humidité.

On entourera avantageusement l'enveloppe en résine polyimide d'un tube d'aluminium soudé, puis d'une armure.

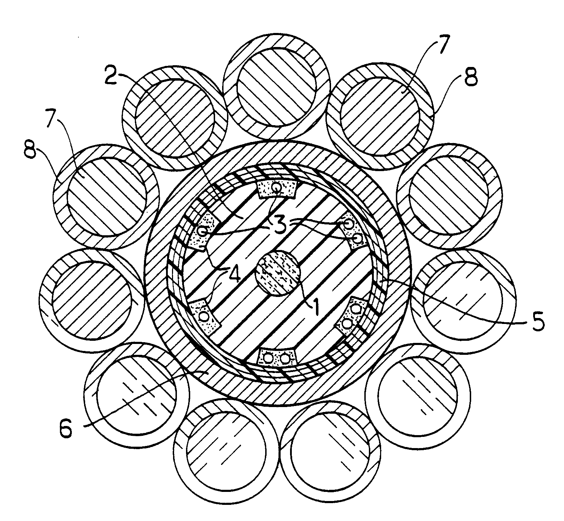

Il est décrit ci-après, à titre d'exemple et en référence à la figure unique du dessin annexé, un câble de garde à fibres optiques pour ligne aérienne.

La figure réprésente le câble en coupe par un plan perpendiculaire à son axe. Il comporte un élément porteur axial 1, en matériau composite fibres de verre-résine époxy ou polyester. Autour de cet élément porteur est disposé le jonc 2 rainuré en polyéthylène réticulé par ajout d'additifs formés par des silanes, assurant sa réticulation par exposition à l'humidité pendant une certaine durée selon le procédé dit "Sioplas", décrit dans le document GB-A-1.286.460. Dans les rainures hélicoïdales de ce jonc sont disposées des fibres optiques 3, noyées dans une matière visqueuse à base de silicone 4, résistant à une température de 300° à 350°C. Le jonc rainuré est enveloppé d'un ruban de polyimide 5, enroulé hélicoïdalement autour de lui. L'enveloppe de polyimide est elle-même disposée dans une chemise d'aluminium 6, protégée par une armure de fils d'acier revêtus d'aluminium (revêtement 8).

Au cours d'un essai, la chemise d'aluminium a été portée par effet Joule pendant 30 secondes à une température de 400°C, sans que l'âme optique constituée par le jonc rainuré et les fibres ait été détériorée. Des essais comparatifs, effectués sur des câbles comportant un jonc rainuré en divers polymères thermoplastiques techniques tels qu'une polyamide, du polybutylène téréphtalate, le copolymère fluoré d'éthylène et de tétrafluoréthylène vendu par la société Dupont de Nemours sous la marque "TEFZEL", ou le copolymère perfluoroalcoxy vendu par cette même société sous la désignation "PFA", ont entraîné une détérioration quasi totale de l'âme optique.

## Revendications

1. Câble à fibres optiques capable de résister à une saute de température, pouvant supporter une température de l'ordre de 350°C pendant une courte durée, ledit câble comportant une âme optique entourée par une enveloppe rubanée périphérique (5), dans lequel ladite âme optique comporte au moins un support plastique (2) recevant lesdites fibres optiques (3), une matière visqueuse de remplissage (4) en résine silicone, et au moins un élément porteur (1) en matériau composite fibres de verre-résine thermodurcissable, caractérisé en ce que ledit support plastique (2) est en polyéthylène réticulé et le ruban formant ladite enveloppe (5) est en résine polyimide.

2. Câble selon la revendication 1, caractérisé en ce que ledit support plastique (2) est en polyéthylène réticulé par addition d'un silane et traitement par humidité.

3. Câble selon l'une des revendications 1 et 2, caractérisé en ce que ladite enveloppe en résine polyimide (5) est entourée d'un tube d'aluminium soudé (6), lui-même entouré d'une armure de fils conducteurs (7).

## Patentansprüche

1. Lichtfaserkabel, das einem Temperatursprung widerstehen kann und das einer Temperatur in der Größenordnung von 350°C während einer kurzen Zeit standhalten kann, wobei das Kabel eine optische Seele aufweist, die von einer Hülle (5) aus einem Bandwickel umgeben ist, wobei die optische Seele mindestens einen Kunststoffträger (2), der die Lichtleitfasern (3) aufnimmt, ein viskoses Füllmaterial (4) aus Silikonharz und mindestens ein Zugelement (1) aus Verbundmaterial mit Glasfasern und wärmehärtbarem Harz aufweist, dadurch gekennzeichnet, daß der Kunststoffträger (2) aus vernetztem Polyäthylen ist und das die Hülle bildende Band (5) aus Polyimidharz besteht.

2. Kabel nach Anspruch 1, dadurch gekennzeichnet, daß der Kunststoffträger (2) aus Polyäthylen besteht, das durch Zusatz eines Silans und Feuchtigkeitsbehandlung vernetzt ist.

3. Kabel nach einem der Ansprüche 1 und 2, dadurch gekennzeichnet, daß die Hülle aus Polyimidharzband (5) von einem geschweißten Aluminiumrohr (6) umgeben wird, das selbst von einer Armierung aus leitenden Drähten (7) umgeben ist.

## Claims

1. An optical fiber cable capable of withstanding a jump in temperature of about 350°C for a short period of time, said cable comprising an optical core surrounded by a taped peripheral envelope (5), wherein said optical core comprises at least one plastics support (2) receiving said optical fibers (3), a viscous filling material (4) of silicone resin, and at least one carrier element (1) made of a glass fiber and thermosetting resin composite, characterized in that said plastics support (2) is made of cross-linked polyethylene, and the tape forming said envelope (5) is made of polyimide resin.

2. A cable according to claim 1, characterized in that said plastics support (2) is of cross-linked polyethylene by adding a silane and by moisture treatment.

3. A cable according to claim 1 or 2, characterized in that said polyimide resin envelope (5) is surrounded by a tube of welded aluminum (6), itself surrounded by conductive wire armoring (7).
